(19) Europäisches Patentamt
European Patent Office
Office européen des brevets

(11) **EP 2 378 724 B1**

(12) **EUROPEAN PATENT SPECIFICATION**

(45) Date of publication and mention
of the grant of the patent:
**06.06.2012   Bulletin 2012/23**

(51) Int Cl.:
*H04L 12/56* (2006.01)          *H04J 3/16* (2006.01)

(21) Application number: **10305390.6**

(22) Date of filing: **15.04.2010**

(54) **Link aggregation in a communication network**

Verbindungsaggregation in einem Kommunikationsnetzwerk

Agrégation de liens dans un réseau de communication

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**19.10.2011   Bulletin 2011/42**

(73) Proprietor: **Alcatel Lucent**
**75007 Paris (FR)**

(72) Inventors:
  • **Torassa, Sergio**
    **17019, VARAZZE (IT)**
  • **Omero, Massimiliano**
    **16147, GENOVA (IT)**

(74) Representative: **Schmidt, Werner Karl**
**Alcatel-Lucent Deutschland AG**
**Intellectual Property & Standards**
**Lorenzstrasse 10**
**70430 Stuttgart-Zuffenhausen (DE)**

(56) References cited:
**EP-A1- 1 367 751     DE-B3-102005 037 580**

  • **"Link capacity adjustment scheme (LCAS) for virtual concatenated signals" ITU-T G.7042/Y. 1305, XX, XX, 1 November 2001 (2001-11-01), pages 1-25, XP002216519**

**Description**

**Technical field**

The present invention generally relates to the field of communication networks. More particularly, the present invention relates to link aggregation in a communication network.

**Background art**

In a communication network, nodes are typically connected each other through links. Each node typically comprises a number of interfaces suitable for terminating the links exiting/entering the node.

Link aggregation is a known technique defined by the standard IEEE802.3-2005, Clause 43 (pages 285-349), that provides for aggregating one or more interfaces (or ports) at a node of a communication network so as to form a single Link Aggregation Group (briefly, LAG). The interfaces aggregated in a same LAG are typically termed "members" of the LAG.

According to the above mentioned standard, traffic to be transmitted by a LAG is equally shared among all the members of the LAG. Hence, according to the standard, all the members of a LAG must have equal bandwidths. Indeed, if the members of a LAG had different bandwidths, equally sharing the traffic might lead to overflow of the members having lower bandwidth. For instance, transmission of traffic at 500 Mb/s by a LAG comprising a first member with a 100 Mb/s bandwidth and a second member with a 1 Gb/s bandwidth would require transmission of traffic at 250 Mb/s by each member. However, the bandwidth of the first member is lower than 250 Mb/s, and accordingly the first member would overflow, thereby causing loss of traffic.

Link aggregation may be applied to different types of communication networks.

For instance, link aggregation may be applied to Ethernet networks. In such a context, a LAG comprises one or more physical Ethernet interfaces.

Besides, link aggregation may be applied also to SDH (or SONET or OTN) networks implementing the known Ethernet-over-SDH (or SONET or OTN) technique. Herein after, for simplicity, reference will be made only to SDH, though the same considerations also apply *mutatis mutandis* to SONET and OTN.

According to the known Ethernet-over-SDH technique, Ethernet frames are suitably encapsulated (typically, using the known Generic Framing Procedure GFP) and then mapped into a number of virtual containers of the SDH hierarchy (such as for instance VC-4, VC-3, VC-12 or VC-11), typically using the known Virtual Concatenation technique (briefly, VCAT). According to the VCAT technique, up to 256 virtual containers of a same type may be concatenated together so as to form a Virtual Concatenation Group (briefly, VCG), which is treated as if it were a single virtual container. Hence, the Ethernet frames are mapped in the virtual containers of the VCG, and the virtual containers with the encapsulated Ethernet frames mapped therein are then transmitted across the SDH network according to a circuit-switching mechanism. Basically, the VCG acts as a logical Ethernet interface.

Link aggregation may be applied to SDH networks implementing Ethernet-over-SDH based on the VCAT technique. In such a context, a LAG comprises one or more logical Ethernet interface, i.e. one or more VCGs. In other words, the VCAT technique is nested in the link aggregation technique: VCAT provides concatenation of virtual containers for forming VCGs, and link aggregation provides aggregation of the VCGs for forming a LAG.

Since, as mentioned above, according to link aggregation all the members of a LAG must have a same bandwidth, all the VCGs of a same LAG must have a same bandwidth, i.e. they must comprise a same number of virtual containers of a same type. For instance, a LAG may comprise two VCGs, each VCG comprising 10 VC-4. Since the bandwidth of each VC-4 is 150 Mb/s, the bandwidth of each VCG is 10 x 150 Mb/s = 1.5 Gb/s, and the overall bandwidth of the LAG is 2 x 10 x 150 Mb/s = 3 Gb/s.

Typically, VCAT is used for providing Ethernet logical interfaces with increased bandwidth, whereas link aggregation is used for supporting traffic protection mechanisms. For instance, the above exemplary LAG (comprising 2 VCGs of 10 VC-4 each) supports transmission of Ethernet frames at a maximum bandwidth of 1.5 Gb/s. In failure-free conditions, the Ethernet frames are equally shared among the two VCGs. If one of the two VCGs become failed, traffic continues being transmitted over the failure-free VCG.

DE 10 2005 037580 B3 discloses a method that involves combining data to a virtual concatenated group using the link capacity adjustment scheme (LCAS). The virtual concatenated group is divided into two virtual concatenated groups in the transmission side. The data of two different types are included in the respective virtual concatenated group and are transmitted over a data network. The two virtual concatenated groups are characterized through an entry into a field pertaining to the LCAS protocol.

## Summary of the invention

For increasing the overall bandwidth of a LAG, a possible solution is adding one or more further members to the LAG. According to the above mentioned standard, such one or more further members must have the same bandwidth as the members already included in the LAG. Similarly, for decreasing the bandwidth of a LAG, one or more members may be removed from the LAG. Hence, according to this solution, the overall bandwidth of a LAG may be varied (i.e. increased or decreased) with a granularity which is substantially equal to the bandwidth of a single member.

However, disadvantageously, the bandwidth of a single member may be higher than the desired granularity. For instance, by referring to the above exemplary LAG (comprising 2 VCGs of 10 VC-4 each), its overall bandwidth may be varied only by multiples of 1.5 Gb/s. However, in some cases, variations with a finer granularity (e.g. 300 Mb/s) may be desired. A finer granularity would allow exploiting more efficiently the bandwidth resources available at a node. Indeed, the requests for bandwidth variations (typically, increases) made by an end user may be matched in a more precise way, thereby reducing the amount of allocated bandwidth that exceeds the requested bandwidth and that is accordingly unused.

A possible solution for reducing granularity may be providing members with a lower bandwidth. This would allow varying the overall bandwidth of the LAG with a reduced granularity by adding/removing members to/from the LAG. For instance, in case the members of the LAG are VCGs, VCGs with a reduced number of virtual containers may be provided. By referring to the above exemplary LAG, each VCG may include not 10 VC-4, but only 2 VC-4. This would allow varying the overall bandwidth of the LAG with a reduced granularity equal to the bandwidth of 2 VC-4, i.e. 2 x 150 Mb/s = 300 Mb/s.

The lower the bandwidth of the members, the finer the granularity.

However, the bandwidth of the members can not be arbitrarily reduced for reducing granularity. Indeed, according to the above mentioned standard, a LAG may comprise no more than 16 members. Therefore, if a LAG with a certain overall bandwidth is needed, the minimum bandwidth of each member (and therefore the minimum granularity) is equal to the overall bandwidth divided by 16. Members with lower bandwidth disadvantageously do not allow providing a LAG with the needed overall bandwidth.

In principle, a finer granularity may be obtained by varying the bandwidth of each member of the LAG by a same amount.

This may be performed, for instance, by removing all the members from the LAG, varying their bandwidths and then reintroducing them into the LAG. This solution, however, is almost inapplicable, since it disadvantageously requires stopping transmission of the traffic flow through the LAG for a time period.

In view of the above, the Applicant has tackled the problem of providing a node supporting link aggregation, that allows varying the overall bandwidth of a LAG with a granularity smaller than the bandwidth of the single members of the LAG, without stopping transmission of the traffic.

According to a first aspect, the present invention provides a node for a communication network, the node comprising:

- n logical interfaces aggregated so as to form a link aggregation group configured to transmit a traffic flow, n being an integer equal to or higher than 2, the n logical interfaces having n respective bandwidths; and
- a divider configured to divide and distribute the traffic flow among the n logical interfaces,

the node being characterized in that it further comprises:

- a control logic configured to, when at least one first bandwidth of the n respective bandwidths has a first value and at least one second bandwidth of the n respective bandwidths has a second value different from the first value:

  - determine a minimum bandwidth as a minimum among the n respective bandwidths; and
  - instruct the divider to divide and distribute the traffic flow among the n logical interfaces assuming that the n respective bandwidths are equal to the minimum bandwidth.

Preferably, when the n respective bandwidths have the first value, the control logic is further configured to:

- receive a request for varying an overall bandwidth of the link aggregation group;
- vary each of the n respective bandwidths by an amount so that, during varying, at least one of the n respective bandwidths has the second value different from the first value,
- during varying, determine the minimum bandwidth as the minimum among the n respective bandwidths, and instruct the divider to divide and distribute the traffic flow among the n logical interfaces assuming that the n respective bandwidths are equal to the minimum bandwidth.

Preferably, the control logic is configured to vary each of the n respective bandwidths by the amount one-by-one.

Preferably, the n logical interfaces correspond to n virtual concatenation groups, and the control logic is configured to vary each of the n respective bandwidths by the amount adding or removing a number of virtual containers from each of the n virtual concatenation groups.

Preferably, when the n respective bandwidths have the first value, the control logic is further configured to:

- detect that at least one logical interface of the n logical interfaces, due to a failure, has a reduced bandwidth equal to the second value which is lower than the first value;
- determine the minimum bandwidth as the minimum among the n respective bandwidths; and
- instruct the divider to, before the failure is fixed, divide and distribute the traffic flow among the n logical interfaces assuming that the n respective bandwidths are equal to the minimum bandwidth.

Preferably, the control logic is configured to:

- compare the reduced bandwidth with a threshold;
- if the reduced bandwidth is higher than the threshold, determine the minimum bandwidth as the minimum among the n respective bandwidths, and instruct the divider to before the failure is fixed, divide and distribute the traffic flow among the n logical interfaces assuming that the n respective bandwidths are equal to the minimum bandwidth; and
- if the reduced bandwidth is lower than the threshold, remove the at least one logical interface from the link aggregation group and instruct the divider to, before the failure is fixed, divide and distribute the traffic flow among remaining logical interfaces of the n logical interfaces.

Preferably, the control logic is configured to provide the threshold according to the following equation:

$$TH = \frac{n-1}{n} \times B,$$

TH being the threshold and B being the first value of the n respective bandwidths before the failure occurs.

According to a second aspect, the present invention provides a communication network comprising a node as set forth above.

According to a third aspect, the present invention provides a method for transmitting a traffic flow through a link aggregation group of a node of a communication network, the node comprising n logical interfaces aggregated so as to form the link aggregation group, n being an integer equal to or higher than 2, the n logical interfaces having n respective bandwidth, the method being characterized in that it comprises, when at least one first bandwidth of the n respective bandwidths has a first value, and at least one second bandwidth of the n respective bandwidths has a second value different from the first value, the following steps:

a) determining a minimum bandwidth as a minimum among the n respective bandwidths; and
b) dividing and distributing the traffic flow among the n logical interfaces assuming that the n respective bandwidths are equal to the minimum bandwidth.
Preferably, the method further comprises varying an overall bandwidth of the link aggregation group, wherein the n respective bandwidths have the first value before varying is applied, varying comprising:
c) varying each of the n respective bandwidths by an amount so that, during varying, at least one of the n respective bandwidths have the second value different from the first value,

wherein steps a) and b) are performed while step c) is performed.

Preferably, the method further comprises managing a failure affecting at least one logical interface of the n logical interfaces, wherein the n respective bandwidths have the first value before the failure occurs, managing comprising:

c') detecting that the at least one logical interface, due to the failure, has a bandwidth with the second value lower than the first value,

wherein steps a) and b) are performed before the failure is fixed.

## Brief description of the drawings

The present invention will become clearer by reading the following detailed description, given by way of example and not of limitation, to be read by referring to the accompanying drawings, wherein:

- Figures 1a and 1b show a node suitable for implementing the known Ethernet-over-SDH technique, before and after a variation of the overall bandwidth of a LAG is applied, according to an embodiment of the present invention;
- Figure 2 is a flow chart of the operation of the node of Figure 1; and
- Figure 3 is a flow chart of the operation of the node of Figure 1, in case of failure.

## Detailed description of preferred embodiments of the invention

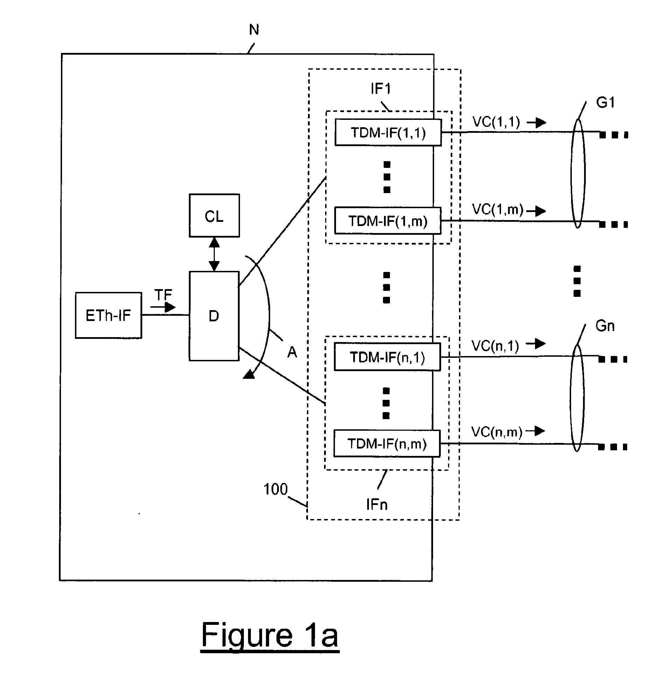

Figure 1a schematically shows a node N of a communication network supporting link aggregation. In particular, the node N preferably is a node of a TDM (Time Division Multiplexing) communication network (such as for instance SDH, SONET, OTN or the like) supporting a packet-over-TDM service (such as for instance Ethernet-over-SDH). By way of non limiting example, in the following description it is assumed that the communication network is an SDH network supporting an Ethernet-over-SDH service.

The node N preferably comprises a plurality of TDM interfaces, each TDM interface being configured to transmit a respective virtual container to other nodes (not shown in the drawings) of the communication network. In particular, in Figure 1a the TDM interfaces TDM-IF(1,1), ... TDM-IF(1,m), ..., TDM-IF(n,1), ...., TDM-IF(n,m) are shown. The node N further comprises an Ethernet interface Eth-IF, a divider D and a control logic CL. The divider D has an input connected to the Ethernet interface Eth-IF and a plurality of outputs connectable to the TDM interfaces TDM-IF(1,1), ... TDM-IF(1,m), ..., TDM-IF(n,1 ), ...., TDM-IF(n, m).

The TDM interfaces TDM-IF(1,1), ... TDM-IF(1,m), ..., TDM-IF(n,1), ...., TDM-IF(n,m) are preferably of a same type, i.e. they are preferably configured to transmit respective virtual containers VC(1,1), ... VC(1,m), ..., VC(n,1), ...., VC(n,m) of a same type (for instance, VC-4, VC-3, VC12 or VC-11). Hence, the TDM interfaces TDM-IF(1,1), ... TDM-IF(1,m), ..., TDM-IF(n,1), ...., TDM-IF(n,m) have respective bandwidths equal to a same value $B_{vc}$ (for instance, 150 Mb/s in case of VC-4).

The control logic CL is preferably configured to implement VCAT and link aggregation upon the TDM interfaces of the node N, and to control the divider D accordingly.

In particular, the control logic CL is preferably configured to concatenate the TDM interfaces TDM-IF(1,1), ... TDM-IF(1,m), ..., TDM-IF(n,1), ...., TDM-IF(n,m) for forming a number n of VCGs G1, ..., Gn, each VGC G1, ..., Gn comprising a further number m of virtual containers. The number n is preferably an integer equal to or higher than 2, and also the further number m is preferably an integer equal to or higher than 2. The number n preferably has a maximum value, which may be equal e.g. to 16. Also the further number m preferably has a maximum value, which may be equal to e.g. 256.

Each of the VGSs G1, ..., Gn preferably corresponds to a respective logical interface IF1, ..., IFn comprising m TDM interfaces. In particular, as shown in Figure 1a, the logical interface IF1 comprises the TDM interfaces TDM-IF(1,1), ... TDM-IF(1,m), and the logical interface IFn comprises the TDM interfaces TOM-IF(n,1), ... TDM-IF(n,m). In view of the above, the logical interfaces IF1, ..., IFn preferably have respective bandwidths BW1, ..., BWn equal to a same value B given by the following equation:

$$B = m \times B_{vc}. \qquad [1]$$

Therefore, if for instance n=2 and m=10, the control logic CL preferably forms 2 logical interfaces IF1 and IF2, each logical interface IF1, IF2 comprising 10 TDM interfaces. If the TDM interfaces comprised in the logical interfaces IF1, IF2 are configured to transmit for instance VC-4 containers, according to equation [1] the bandwidths BW1, BW2 of the logical interfaces IF1, IF2 are both equal to B=10 x 150 Mb/s = 1.5 Gb/s.

Further, the control logic CL is preferably configured to aggregate the n logical interfaces IF1, ... IFn in a LAG 100. The overall bandwidth OBW of the LAG 100 is therefore given by the following equation:

$$OBW = n \times B = n \times (m \times B_{vc}). \qquad [2]$$

The LAG 100 is preferably dedicated to the transport of a traffic flow TF generated by the Ethernet interface Eth-IF. The traffic flow TF is preferably a flow of Ethernet frames.

The divider D is preferably configured to receive at its input the traffic flow TF from the Ethernet interface Eth-IF and, under the control of the control logic CL, to equally share the traffic flow TF among the n logical interfaces IF1, ... IFn, as schematically indicated in Figure 1a by the arrow A. As mentioned above, the fact that the bandwiths BW1, ..., BWn of the logical interfaces IF1, ... IFn are all equal to the same value B guarantees that equal sharing of the traffic flow TF among the n logical interfaces IF1, ... IFn does not result in a loss of traffic.

It is now assumed that, while the node N is operating (i.e. the traffic flow TF is transmitted by the LAG 100 as described above), the overall bandwidth of the LAG 100 has to be varied. It is firstly assumed that the overall bandwidth of the LAG 100 has to be increased from its current value OBW=n x B to a higher value.

According to preferred embodiments of the present invention, when the control logic CL receives a request to increase the overall bandwidth of the LAG 100, it preferably increases the bandwidths BW1, ..., BWn of all the logical interfaces IF1, ..., IFn by a same amount $\Delta B$. The amount $\Delta B$ should be the same for all the logical interfaces IF1, ... IFn. Indeed, all the logical interfaces IF1, ... IFn are part of the same LAG 100, and accordingly they should have the same bandwidth also after the increase has been applied, so that loss of traffic continues being prevented.

In particular, the control logic CL preferably increases the bandwidths BW1, ..., BWn of all the logical interfaces IF1, ..., IFn by a same amount $\Delta B$ by adding a same number k of virtual containers to each VGC G1, ..., Gn. The number k is preferably an integer equal to or higher than 1. The k added virtual containers should be of the same type as the m virtual containers already aggregated in each VCGs G1, ..., Gn. Hence, the amount $\Delta B$ by which each bandwidth BW1, ..., BWn is increased is given by the following equation:

$$\Delta B = k \times B_{VC}. \qquad [3]$$

The overall bandwidth of the LAG 100 is accordingly increased from its current value OBW=n x B to a new value given by the following equation:

$$OBW = n \times (B + \Delta B) = n \times (m \times B_{VC} + k \times B_{VC}). \qquad [4]$$

The increase of the overall bandwidth OBW is then $n \times \Delta B = n \times k \times B_{VC}$, and may therefore be tuned by varying k. Hence, the overall bandwidth OBW may be increased with a granularity G given by the following equation:

$$G = n \times B_{VC}. \qquad [5]$$

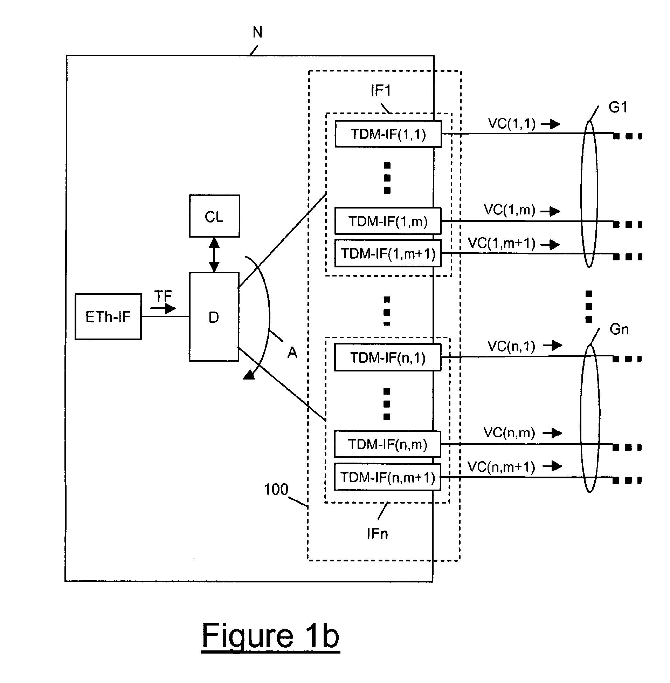

For instance, Figure 1b shows the case of minimum increase of the overall bandwidth OBW, which is obtained when k=1, i.e. when a single virtual container VC(1, m+1), ...,VC(n,m+1) is added to each VGC G1, ..., Gn. This increases the overall bandwidth OBW by n x $B_{VC}$.

The granularity G of equation [5] may be advantageously much lower than the granularity obtained by adding a further member (i.e. a further logical interface) to the LAG 100.

If, for instance, n is equal to 2 (i.e. the LAG 100 comprises two logical interfaces IF1, IF2) and m is equal to 10 (i.e. the VCGs G1, G2 corresponding to the logical interfaces IF1, IF2 comprise each ten virtual containers), assuming that the virtual containers are VC-4, the bandwidths BW1, BW2 of the logical interfaces IF, IF2 calculated according to equation [1] are equal to B=10 x 150 Mb/s = 1.5 Gb/s, whereas the overall bandwidth of the LAG 100 calculated according to equation [2] is OBW = 2 x (10 x 150 Mb/s) = 3 Gb/s.

Increasing such overall bandwidth OBW according to the above described prior art solution would require adding one or more further logical interfaces (for instance, IF3, IF4, ...) to the LAG 100. Hence, the obtained granularity would be equal to B = 1.5 Gb/s.

On the other hand, the granularity G calculated according to equation [5] is G = 2 x 150 Mb/s = 300 Mb/s, which is advantageously much lower than 1.5 Gb/s.

Although the above is a mere example, the granularity G is much lower than the value B in most applications. Indeed, the number of virtual containers that are concatenated in a single VCG is typically much higher than the number of VCGs that are aggregated in a LAG. In other words, n is typically much smaller than m. As it can be noticed by comparing equation [5] with equation [1], this directly implies that the granularity G is typically much smaller than the value B.

Such finer granularity advantageously allows tuning the increases of the overall bandwidth OBW in a finer way, thereby allowing a network operator to fit in a more precise way the demands for additional bandwidth received from end users. Such a more precise fitting advantageously allows exploiting the bandwidth resources of the communication network in a more efficient way, since the amount of allocated bandwidth which exceeds the bandwidth demand is advantageously minimized.

On the other hand, the granularity G may be advantageously reduced without limiting the maximum obtainable overall bandwidth of the LAG 100. Indeed, the granularity G may be reduced by reducing n, i.e. the number of logical interfaces IF1, ..., IFn comprised in the LAG 100. However, this does not limit the maximum obtainable overall bandwidth OBW, since reduction of the overall bandwidth OBW due to reduction of n may be compensated by increasing m. For instance, a LAG with three logical interfaces (n=3) comprising each ten VC-4 (m=10, Bvc=150 Mb/s) has an overall bandwidth OBW = 3 x (10 x 150 Mb/s) = 4.5 Gb/s, that may be varied with a granularity G of 3 x 150 Mb/s = 450 Mb/s. If a finer granularity is desired, n may be reduced from 3 to 2, thereby providing a reduced granularity of 2 x 150 Mb/s = 300 Mb/s. This also reduces the overall bandwidth OBW from 4.5 Gb/s to 2 x (10 x 150 Mb/s) = 3 Gb/s. However, the original value 4.5 Gb/s of the overall bandwidth may be advantageously recovered by increasing m from 10 to 15.

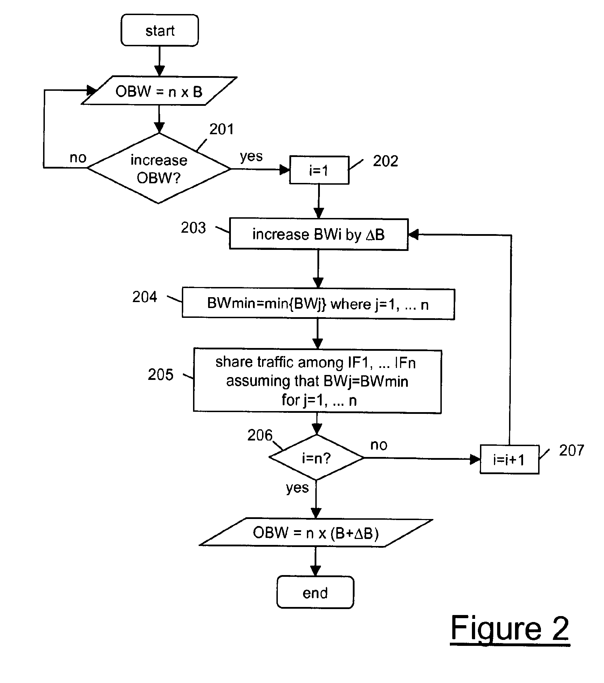

Herein after, with reference to Figure 2, the operation of increasing the bandwidths BW1, ..., BWn by the amount $\Delta B$ as performed by the control logic CL will be described in detail.

As mentioned above, it is firstly assumed that the overall bandwidth of the LAG 100 is OBW=n x B. When the control logic CL receives a request to increase the overall bandwidth OBW (step 201), it preferably starts increasing the bandwidths BW1, ..., BWn of the logical interfaces IF1, ... IFn by the amount $\Delta B$, one-by-one. Herein after, for better clarifying the operation of increasing the bandwidths BW1, ..., BWn one-by-one, it is assumed that n is equal to or higher than 3.

More particularly, the control logic CL preferably increases the bandwidth BW1 of the first logical interface IF1 by the amount $\Delta B$ (step 203). Step 203 preferably comprises adding a number k of virtual containers to the VCG G1 corresponding to the first logical interface IF1.

Then, the control logic CL preferably determines a minimum bandwidth BWmin as the minimum among the bandwidths BW1, ..., BWn of all the logical interfaces IF1, ... IFn of the LAG 100 (step 204). Since the bandwidth BW1 is now equal to B+$\Delta B$, while all the other bandwidths BW2, ..., BWn are still equal to B, the minimum bandwidth BWmin determined at step 204 is B.

Then, the control logic CL preferably instructs the divider D to share the traffic flow TF among all the logical interfaces IF1, ... IFn assuming that all the logical interfaces IF1, ... IFn have their bandwidths BW1, ..., BWn equal to the minimum bandwidth BWmin (step 205), i.e. B. In other words, the control logic CL operates the divider D so that it ignores that the bandwidth BW1 has already been increased. Hence, while the bandwidths BW2, ..., BWn may be fully exploited by the divider D for equally sharing transmission of the traffic flow TF, the bandwidth BW may be only partially exploited, since a portion thereof (i.e. $\Delta B$) corresponding to the added virtual containers is ignored.

Then, the control logic CL applies step 203 to the second logical interface IF2 of the LAG 100, i.e. it increases its bandwidth BW2 by the amount $\Delta B$. Again, step 203 preferably comprises adding the number k of virtual containers to the VCG G2 corresponding to the second logical interface IF2.

Then, the control logic CL preferably repeats step 204, i.e. it determines again the minimum bandwidth BWmin as the minimum among the bandwidths BW1, ..., BWn of all the logical interfaces IF1, ... IFn of the LAG 100. Since now the bandwidths BW1 and BW2 are equal to B+$\Delta B$, while all the other bandwidths BW3, ..., BWn are equal to B, the determined minimum bandwidth BWmin is again B.

Then, the control logic CL preferably repeats step 205, i.e. it preferably instructs the divider D to share the traffic flow TF among all the logical interfaces IF1, ... IFn assuming that all the logical interfaces IF1, ... IFn have their bandwidths BW1, ..., BWn equal to the minimum bandwidth BWmin, i.e. B. In other words, the control logic CL operates the divider D so that it ignores that the bandwidths BW1 and BW2 have already been increased. Hence, while the bandwidths BW3, ..., BWn may be fully exploited by the divider D for equally sharing transmission of the traffic flow TF, the bandwidths BW1 and BW2 may be only partially exploited, since a portion thereof (i.e. $\Delta B$) corresponding to the added virtual containers is ignored.

Steps 203, 204 and 205 are preferably applied to all the logical interfaces IF1, ..., IFn of the LAG 100. This has been represented in the flow chart of Figure 2 by inserting the above steps 203, 204 and 205 in an indexed loop having an index i controlled by the steps 202 (initialization of the index i), 206 (check on the value of the index i for terminating the indexed loop) and 207 (increase of the index i at each iteration of steps 203, 204, 205).

At the last iteration (index i =n) of step 203, the bandwidth BWn of the last logical interface IFn is finally increased by the amount $\Delta B$. Again, step 203 preferably comprises adding the number k of virtual containers to the VCG Gn corresponding to the last logical interface IFn.

Then, during step 204, the control logic CL preferably determines that the minimum bandwidth BWmin is now equal to B+$\Delta B$, since now all the bandwidths BW1, ..., BWn have been increased by the amount $\Delta B$.

Then, during step 205, the control logic CL preferably instructs the divider D to share the traffic flow TF among the logical interfaces IF1, ... IFn assuming that all the logical interfaces IF1, ... IFn have their bandwidths BW1, ..., BWn equal to the minimum bandwidth BWmin, that is now equal to B+$\Delta B$. Therefore, the divider D is now automatically operated so that it takes into account the whole increased bandwidths of all the logical interfaces IF1, ... IFn. In other words, all the bandwidths BW1, ..., BWn are now fully exploited by the divider D for equally sharing transmission of the traffic flow TF. The overall bandwidth of the LAG 100 is then now OBW=n x (B+ΔB), and may be now fully exploited for transmitting the traffic flow TF.

Therefore, while the operation of increasing the bandwidths BW1, ..., BWn by the amount ΔB is carried out by the control logic CL, the logical interfaces IF1, ..., IFn of the LAG 100 may have different bandwidths BW1, ..., BWn. This is due to the fact that the bandwidths BW1, ..., BWn are increased one-by-one. This supposedly contravenes the constraint imposed by the standard IEEE802.3-2005, Clause 43 (pages 285-349), defining link aggregation, according to which all the members of a LAG must have equal bandwidths. However, it can be noticed that such a constraint may advantageously be contravened without causing loss of traffic, when the operation of increasing is performed according to the flow chart of Figure 2. Indeed, while the bandwidths BW1, ..., BWn are increased one-by-one, the divider D is operated so that it continues considering the bandwidths BW1, ..., BWn as if they were not increased, i.e. as if they all had equal bandwidths with value B. The increase by the amount ΔB is taken into account by the divider D only after all the bandwidths BW1, ..., BWn have been increased, i.e. after the bandwidths BW1, ..., BWn are equal again.

Therefore, advantageously, even if the bandwidths are not equal, the equal sharing of the traffic flow TF performed by the divider D may not induce any loss of traffic, since all the logical interfaces IF1, ... IFn are fictitiously treated as if they had equal bandwidths.

All the above considerations have been made under the assumption that varying the overall bandwidth OBW of the LAG 100 comprises increasing it. However, all the above considerations symmetrically apply to the case wherein a decrease of the overall bandwidth OBW of the LAG 100 is needed.

In such case, when the control logic CL receives a request to decrease the overall bandwidth of the LAG 100, it preferably decreases the bandwidths BW1, ..., BWn of all the logical interfaces IF1, ..., IFn by a same amount ΔB'. The amount ΔB' should be the same for all the logical interfaces IF1, ... IFn, for the same reasons set forth above.

In particular, the control logic CL preferably decreases the bandwidths BW1, ..., BWn of all the logical interfaces IF1, ..., IFn by a same amount ΔB' by removing a same number k' of virtual containers from each VGC G1, ..., Gn. The number k' is preferably an integer equal to or higher than 1. Hence, the amount ΔB' by which each bandwidth BW1, ..., BWn is decreased is given by the following equation:

$$\Delta B' = k' \times B_{VC}. \qquad [6]$$

The overall bandwidth of the LAG 100 is accordingly decreased from its current value OBW=n x B to a new value given by the following equation:

$$OBW = n \times (B - \Delta B') = n \times (m \times B_{VC} - k' \times B_{VC}). \qquad [7]$$

The decrease of the overall bandwidth OBW is then $n \times \Delta B' = n \times k' \times B_{VC}$, and may therefore be tuned by varying k'. Hence, the overall bandwidth OBW may be decreased with the same granularity G given by the above equation [5].

Also the operation of decreasing the bandwidths BW1, ..., BWn by the amount ΔB' is preferably performed by the control logic CL substantially according to the flow chart of Figure 2.

In particular, when the control logic CL receives a request to decrease the overall bandwidth OBW, it preferably starts decreasing the bandwidths BW1, ..., BWn by the amount ΔB', one-by-one. Each time the bandwidth of one of the logical interfaces IF1, ..., IFn is decreased, the control logic CL preferably determines a minimum bandwidth BWmin as the minimum among the bandwidths BW1, ..., BWn of all the logical interfaces IF1, ... IFn of the LAG 100 (corresponding to step 204). After the bandwidth BW1 of the first logical interface IF1 of the LAG 100 is decreased, the minimum bandwidth BWmin becomes equal to B-ΔB'. Hence, the control logic CL preferably instructs the divider D to share the traffic flow TF among the logical interfaces IF1, ... IFn assuming that all the logical interfaces IF1, ... IFn have their bandwidths BW1, ..., BWn equal to B-ΔB' (corresponding to step 205). In other words, the control logic CL operates the divider D so that it assumes that all the bandwidths BW1, ..., BWn have already been decreased.

When the bandwidth BWn of the last logical interface IFn is finally decreased by the amount ΔB', all the bandwidths BW1, ..., BWn have actually been decreased. The divider D continues equally sharing the traffic flow TF among all the logical interfaces IF1, ... IFn, whose bandwidths BW1, ..., BWn are now all actually equal to B-ΔB'.

Therefore, also when the overall bandwidth OBW of the LAG 100 is decreased, the fact that during the operation of decreasing the bandwidths BW1, ..., BWn the logical interfaces IF1, ..., IFn may have different bandwidths BW1, ..., BWn supposedly contravenes the constraint imposed by the above standard defining link aggregation, according to which all the members of a LAG must have equal bandwidths. However, also in this case, such a constraint may advantageously be contravened without causing loss of traffic, since the divider D is operated so that, immediately after the bandwidth of the first logical interface is decreased, it starts considering all the bandwidths BW1, ..., BWn as if they were already increased, i.e. as if they all had equal bandwidths with value B-$\Delta$B'.

Therefore, also in this case, even if the bandwidths BW1, ..., BWn are not equal, the equal sharing of the traffic flow TF performed by the divider D advantageously may not induce any loss of traffic, since all the logical interfaces IF1, ... IFn are fictitiously treated as if they had equal bandwidths.

Although all the logical interfaces IF1, ..., IFn of the LAG 100 are provided with equal bandwidths BW1, ..., BWn, a failure affecting one of the logical interfaces IFn may induce a variation of its bandwidth (typically, a decrease). For instance, if a number h of virtual containers of a VCG become failed, the corresponding logical interface undergo a reduction of bandwidth equal to $h \times B_{vc}$.

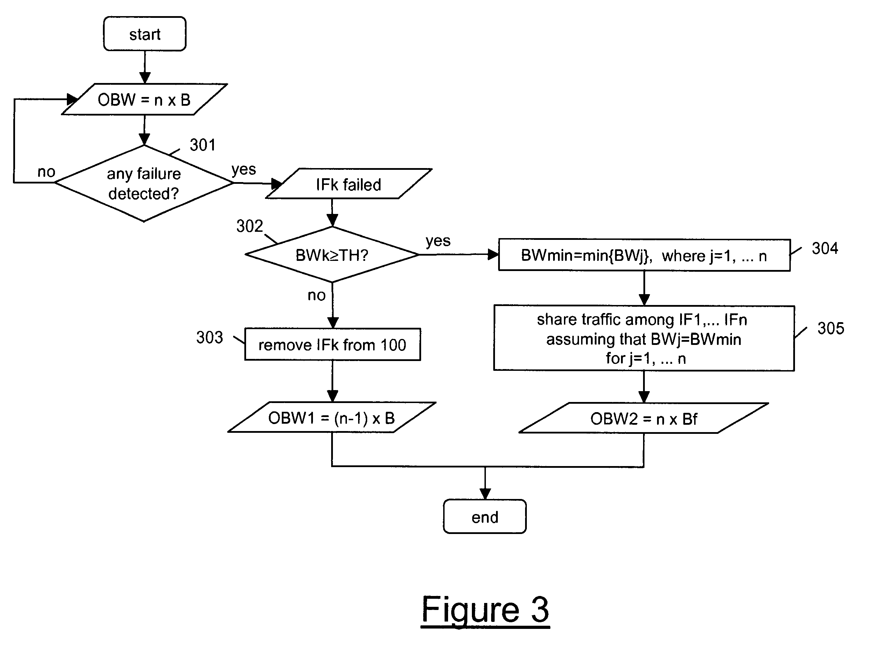

The flow chart of Figure 3 describes the operation of the node N upon detection of a failure inducing a bandwidth decrease on one of the logical interfaces IF1, ..., IFn, according to a preferred embodiment of the present invention.

It is assumed that the bandwidths BW,1 ..., BWn of the logical interfaces IF1, .., IFn in a failure free-condition are equal to $B=m \times B_{vc}$, and that accordingly the overall bandwidth OBW of the LAG 100 is $OBW=n \times B= n \times m \times B_{vc}$.

It is further assumed that the control logic CL of the node N detects that one of the logical interfaces IF1, ..., IFn (for instance, the logical interface IFk) is alarmed (i.e. that one or more of the virtual containers of the corresponding VCG are failed) (step 301), so that its bandwidth BWk is reduced to a failure value $Bf=(m-h) \times B_{vc}$.

Preferably, the control logic CL compares the bandwidth BWk of the alarmed logical interface IFk (i.e. Bf) with a minimum threshold TH (step 302). The value of the minimum threshold TH is selected according to criteria that will be described herein after.

If the bandwidth BWk of the alarmed logical interface IFk is lower than the minimum threshold TH, the control logic CL preferably removes the alarmed logical interface IFk from the LAG 100 (step 303). Due to the failure, the overall bandwidth of the LAG 100 is then decreased to a new value OBW1 given by the following equation:

$$OBW1=(n-1) \times B. \qquad [8]$$

If the bandwidth BWk of the alarmed logical interface IFk is equal to or higher than the minimum threshold TH, the control logic CL preferably determines a minimum bandwidth BWmin as the minimum among the bandwidths BW1, ..., BWn of all the logical interfaces IF1, ... IFn of the LAG 100 (step 304). Since the bandwidth BWk is now equal to the failure value Bf that is lower than B, the minimum bandwidth BWmin determined at step 304 is Bf. Then, the control logic CL preferably instructs the divider D to share the traffic flow TF among the logical interfaces IF1, ... IFn assuming that all the logical interfaces IF1, ... IFn have their bandwidths BW1, ..., BWn equal to the minimum bandwidth BWmin (step 305), i.e. Bf. In other words, the control logic CL operates the divider D so that it assumes that all the logical interfaces IF1, ..., IFn have their bandwidths equal to the bandwidth of the alarmed logical interface IFk. Due to the failure, the overall bandwidth of the LAG 100 is then decreased to a new value OBW2 given by the following equation:

$$OBW2=n \times Bf. \qquad [9]$$

When the failure(s) affecting the virtual containers of the VCG corresponding to the alarmed logical interface IFk is (are) fixed and its bandwidth BWk is again equal to B, the control logic CL is notified, and accordingly repeats steps 304-305. This advantageously allows increasing again the overall bandwidth OBW to its original value $OBW=n \times B$.

Therefore, when a failure affects one or more virtual containers of the VCG corresponding to one of the logical interfaces IF1, ..., IFn thereby reducing its bandwidth, the control logic CL may advantageously choose between two options. According to a first option, the alarmed logical interface is removed from the LAG 100. According to a second option, the alarmed logical interface is not removed from the LAG, and all the logical interfaces of the LAG are treated as if they were affected by the same reduction of bandwidth as the alarmed logical interface.

As mentioned above, the control logic CL chooses between the two options according to the minimum threshold TH. The minimum threshold TH is preferably the minimum failure value Bf that makes the first option more advantageous in terms of overall bandwidth of the LAG 100 than the second option. This may be expressed by the following inequality:

$$OBW1 \geq OBW2, \qquad [10]$$

implying that:

$$TH = \frac{n-1}{n} \times B.$$  [11]

For instance, it is assumed that the LAG 100 comprises two logical interfaces IF1, IF2 (i.e. n=2) that, in failure-free conditions, comprise ten virtual containers VC-4 each (i.e. m=10). The bandwidth $B_{vc}$ of each VC-4 is equal to 150 Mb/s, and accordingly the bandwidths BW1, BW2 of the two logical interfaces IF1, IF2 calculated according to the above equation [1] are equal to B= 10 x 150 Mb/s = 1.5 Gb/s. The overall bandwidth of the LAG 100 calculated according to the above equation [2] is therefore equal to OBW = 2 x 1.5 Gb/s = 3 Gb/s. The minimum threshold TH calculated according to the above equation [11] is then equal to TH= (1/2) x 1.5 Gb/s = 750 Mb/s.

In a first scenario, it is assumed that two VC-4 of the first logical interface IF1 become failed, this failure inducing a reduction of the bandwidth BW1 from B=1.5 Gb/s to Bf=1.5 Gb/s - (2 x 150 Mb/s) = 1.2 Gb/s. Since Bf is higher than the minimum threshold TH, the alarmed logical interface IF1 is not removed from the LAG 100, and the logical interfaces IF1, IF2 are treated as if their bandwidths BW1, BW2 were both equal to Bf=1.2 Gb/s. The overall bandwidth of the LAG 100 calculated according to the above equation [9] is then 2 x 1.2 Gb/s = 2.4 Gb/s. If, in this first scenario, the alarmed logical interface IF1 were removed from the LAG 100, the overall bandwidth of the LAG 100 calculated according to the above equation [8] would be 1.5 Gb/s, which is much lower than 2.4 Gb/s. In other words, in this first scenario the failure induces a small reduction of the bandwidth BW1, and accordingly it is more convenient applying this small reduction also to the failure-free logical interface IF2, rather than removing the alarmed logical interface IF1 from the LAG 100.

In a second scenario, it is assumed that nine VC-4 of the first logical interface IF1 become failed, the failure inducing a reduction of the bandwidth BW1 from B=1.5 Gb/s to Bf=1.5 Gb/s - (9 x 150 Mb/s) = 150 Mb/s. Since Bf is lower than the minimum threshold TH, the alarmed logical interface IF1 is removed from the LAG 100. The overall bandwidth of the LAG 100 calculated according to the equation [8] is then now 1.5 Gb/s. If, in this second scenario, the alarmed logical interface IF1 were not removed from the LAG 100 and both the logical interfaces IF1, IF2 were treated as if their bandwidths BW1, BW2 were both equal to Bf=150 Mb/s, the overall bandwidth of the LAG 100 calculated according to the above equation [9] would be 2 x 150 Mb/s = 300 Mb/s, which is much lower than 1.5 Gb/s. In other words, in this second scenario the failure induces a consistent reduction of the bandwidth BW1, and accordingly it is more convenient removing the alarmed logical interface IF1 from the LAG 100, rather than applying this consistent reduction also to the failure-free logical interface IF2.

Therefore, the minimum threshold advantageously allows selecting, among the first and second options, the one that induces a minimum reduction on the overall bandwidth OBW of the LAG 100. This advantageously minimizes the impact of the failure on the overall bandwidth of the LAG, thereby minimizing the risk of loss of traffic due to the failure.

Although the above detailed description refers to the case of an SDH network supporting an Ethernet-over-SDH service, this is only merely exemplary. In particular, the above described method for varying the overall bandwidth of a LAG may be applied not only to a LAG whose members are logical interfaces, but also to a LAG whose members are physical interfaces (e.g. physical Ethernet interfaces). In other words, the above described method may be applied to any type of communication network supporting link aggregation, even if not in combination with VCAT (for instance, Ethernet networks, MPLS networks, ATM networks and the like). Also in these cases, according to embodiments of the present invention, the overall bandwidth of the LAG is advantageously varied by varying the bandwidth of each member (namely, of each physical interface) by the amount ΔB. Such operation is preferably performed one-by-one on the members, substantially according to the flow chart of Figure 2. Besides, possible bandwidth reductions of the members due to failures are preferably managed according to the flow chart of Figure 3.

**Claims**

1. A node (N) for a communication network, said node (N) comprising:

  - n logical interfaces (IF1, ... IFn) aggregated so as to form a link aggregation group (100) configured to transmit a traffic flow (TF), n being an integer equal to or higher than 2, said n logical interfaces (IF1, ... IFn) having n respective bandwidths (BW1, ... BWn); and
  - a divider (D) configured to divide and distribute said traffic flow (TF) among said n logical interfaces (IF1, ... IFn),

  said node (N) being **characterized in that** it further comprises:

- a control logic (CL) configured to, when at least one first bandwidth of said n respective bandwidths (BW1, ... BWn) has a first value (B) and at least one second bandwidth of said n respective bandwidths (BW1, ... BWn) has a second value (B+ΔB; Bf) different from said first value (B):

> - determine a minimum bandwidth (BWmin) as a minimum among said n respective bandwidths (BW1, ... BWn); and
> - instruct said divider (D) to divide and distribute said traffic flow (TF) among said n logical interfaces (IF1, ... IFn) assuming that said n respective bandwidths (BW1, ... BWn) are equal to said minimum bandwidth (BWmin).

2. A node (N) according to claim 1 wherein, when said n respective bandwidths (BW1, ... BWn) have said first value (B), said control logic (CL) is further configured to:

> - receive a request for varying an overall bandwidth (OBW) of said link aggregation group (100);
> - vary each of said n respective bandwidths (BW1, ... BWn) by an amount (ΔB) so that, during said varying, at least one of said n respective bandwidths (BW1, ... BWn) has said second value (B+ΔB) different from said first value (B),
> - during said varying, determine said minimum bandwidth (BWmin) as said minimum among said n respective bandwidths (BW1, ... BWn), and instruct said divider (D) to divide and distribute said traffic flow (TF) among said n logical interfaces (IF1, ... IFn) assuming that said n respective bandwidths (BW1, ... BWn) are equal to said minimum bandwidth (BWmin).

3. The node (N) according to claim 2, wherein said control logic (CL) is configured to vary each of said n respective bandwidths (BW1, ... BWn) by said amount (ΔB) one-by-one.

4. The node (N) according to claim 2 or 3, wherein said n logical interfaces (IF1, ... IFn) correspond to n virtual concatenation groups (G1, ... Gn), and wherein said control logic (CL) is configured to vary each of said n respective bandwidths (BW1, ... BWn) by said amount (ΔB) adding or removing a number (k, k') of virtual containers from each of said n virtual concatenation groups (G1, ... Gn).

5. The node (N) according to any of the preceding claims wherein, when said n respective bandwidths (BW1, ... BWn) have said first value (B), said control logic (CL) is further configured to:

> - detect that at least one logical interface (IFk) of said n logical interfaces (IF1, ... IFn), due to a failure, has a reduced bandwidth (BWk) equal to said second value (Bf) which is lower than said first value (B);
> - determine said minimum bandwidth (BWmin) as said minimum among said n respective bandwidths (BW1, ... BWn); and
> - instruct said divider (D) to, before said failure is fixed, divide and distribute said traffic flow (TF) among said n logical interfaces (IF1, ... IFn) assuming that said n respective bandwidths (BW1, ... BWn) are equal to said minimum bandwidth (BWmin).

6. The node (N) according to claim 5, wherein said control logic (CL) is configured to:

> - compare said reduced bandwidth (BWk) with a threshold (TH);
> - if said reduced bandwidth (BWk) is higher than said threshold (TH), determine said minimum bandwidth (BWmin) as said minimum among said n respective bandwidths (BW1, ... BWn), and instruct said divider (D) to, before said failure is fixed, divide and distribute said traffic flow (TF) among said n logical interfaces (IF1, ... IFn) assuming that said n respective bandwidths (BW1, ... BWn) are equal to said minimum bandwidth (BWmin); and
> - if said reduced bandwidth (BWk) is lower than said threshold (TH), remove said at least one logical interface (IFk) from said link aggregation group (100), and instruct said divider (D) to, before said failure is fixed, divide and distribute said traffic flow (TF) among remaining logical interfaces of said n logical interfaces (IF1, ... IFn).

7. The node (N) according to claim 6, wherein said control logic (CL) is configured to provide said threshold (TH) according to the following equation:

$$TH = \frac{n-1}{n} \times B,$$

TH being said threshold and B being said first value of said n respective bandwidths (BW1, .., BWn) before said failure occurs.

8. A communication network comprising a node (N) according to any of the preceding claims.

9. A method for transmitting a traffic flow (TF) through a link aggregation group (100) of a node (N) of a communication network, said node (N) comprising n logical interfaces (IF1, ... IFn) aggregated so as to form said link aggregation group (100), n being an integer equal to or higher than 2, said n logical interfaces (IF1, ... IFn) having n respective bandwidths (BW1, ... BWn), said method being **characterized in that** it comprises, when at least one first bandwidth of said n respective bandwidths (BW1, ... BWn) has a first value (B), and at least one second bandwidth of said n respective bandwidths (BW1, ... BWn) has a second value (B+ΔB; Bf) different from said first value (B), the following steps:

a) determining a minimum bandwidth (BWmin) as a minimum among said n respective bandwidths (BW1, ... BWn); and
b) dividing and distributing said traffic flow (TF) among said n logical interfaces (IF1, ... IFn) assuming that said n respective bandwidths (BW1, ... BWn) are equal to said minimum bandwidth (BWmin).

10. The method according to claim 9, said method further comprising varying an overall bandwidth (OBW) of said link aggregation group (100), wherein said n respective bandwidths (BW1, ... BWn) have said first value (B) before said varying is applied, said varying comprising:

c) varying each of said n respective bandwidths (BW1, ... BWn) by an amount (ΔB) so that, during said varying, at least one of said n respective bandwidths (BW1, ... BWn) have said second value (B+ΔB) different from said first value (B),

wherein said steps a) and b) are performed while said step c) is performed.

11. The method according to claim 10, wherein said step c) comprises varying said each of said n respective bandwidths (BW1, ... BWn) by said amount (ΔB) one-by-one.

12. The method according to claim 10 or 11, wherein said n logical interfaces (IF1, ... IFn) correspond to n virtual concatenation groups (G1, ... Gn), and wherein said step c) comprises adding or removing a number (k, k') of virtual containers from each of said n virtual concatenation groups (G1, ... Gn).

13. The method according to claim 9, said method further comprising managing a failure affecting at least one logical interface (IFk) of said n logical interfaces (IF1, ... IFn), wherein said n respective bandwidths (BW1, ... BWn) have said first value (B) before said failure occurs, said managing comprising:

c') detecting that said at least one logical interface (IFk), due to said failure, has a bandwidth (BWk) with said second value (Bf) lower than said first value (B),

wherein said steps a) and b) are performed before said failure is fixed.

14. The method according to claim 13, further comprising:

- after said step c'), comparing said reduced bandwidth (BWk) with a threshold (TH);
- if said reduced bandwidth (BWk) is higher than said threshold (TH), performing said steps a) and b); and
- if said reduced bandwidth (BWk) is lower than said threshold (TH), removing said at least one logical interface (IFk) from said link aggregation group (100) and dividing and distributing said traffic flow (TF) among remaining logical interfaces of said n logical interfaces (IF1.... IFn).

15. The method according to claim 14, wherein said comparing comprises providing said threshold (TH) according to the following equation:

$$TH = \frac{n-1}{n} \times B \, ,$$

TH being said threshold and B being said first value of said n respective bandwidths (BW1, ... BWn) before said failure occurs.

**Patentansprüche**

1. Knoten (N) für ein Kommunikationsnetzwerk, wobei der besagte Knoten (N) umfasst:

   - Logische Schnittstellen (IF1, ...IFn), die derart aggregiert sind, dass sie eine Link-Aggregation-Gruppe (100) bilden, dafür konfiguriert, einen Verkehrsfluss (TF) zu übertragen, wobei n eine ganze Zahl gleich oder größer als 2 ist, wobei die besagten n logischen Schnittstellen (IF1, ... IFn) n jeweilige Bandbreiten (BW1, ...BWn) aufweisen; und
   - einen Teiler (D), dafür konfiguriert, den besagten Verkehrsfluss (TF) zu teilen und auf die besagten n logischen Schnittstellen (IF1, ... IFn) zu verteilen,

   wobei der besagte Knoten (N) **dadurch gekennzeichnet ist, dass** er weiterhin umfasst:

   - Eine Steuerlogik (CL), dafür konfiguriert, wenn mindestens eine erste Bandbreite der besagten n jeweiligen Bandbreiten (BW1, ... BWn) einen ersten Wert (B) aufweist und mindestens eine zweite Bandbreite der besagten n jeweiligen Bandbreiten (BW1, ... BWn) einen zweiten Wert (B+ΔB; Bf) aufweist, der sich von dem besagten ersten Wert (B) unterscheidet:
   - Eine Mindestbandbreite (BWmin) als ein Minimum unter den besagten n jeweiligen Bandbreiten (BW1, ... BWn) zu bestimmen; und
   - den besagten Teiler (D) anzuweisen, den besagten Verkehrsfluss (TF) zu teilen und auf die besagten n logischen Schnittstellen (IF1, ... IFn) zu verteilen, unter der Voraussetzung, dass die besagten n jeweiligen Bandbreiten (BW1, ... BWn) der besagten Mindestbandbreite (BWmin) entsprechen.

2. Knoten (N) nach Anspruch 1, wobei, wenn die besagten n jeweiligen Bandbreiten (BW1, ... BWn) den besagten ersten Wert (B) aufweisen, die besagte Steuerlogik (CL) weiterhin konfiguriert ist für:

   - den Empfang einer Anforderung für das Ändern einer Gesamtbandbreite (OBW) der besagten Link-Aggregation-Gruppe (100);
   - das Ändern der besagten n jeweiligen Bandbreiten (BW1, ... BWn) um eine Menge (ΔB), so dass, während der besagten Änderung, mindestens eine der besagten n jeweiligen Bandbreiten (BW1, ... BWn) den besagten zweiten Wert (B+ ΔB), welcher sich von dem besagten ersten Wert (B) unterscheidet, aufweist,
   - das Bestimmen, während der besagten Änderung, der besagten Mindestbandbreite (BWmin) als das besagte Minimum unter den besagten n jeweiligen Bandbreiten (BW1, ... BWn), und das Anweisen des besagten Teilers (D), den besagten Verkehrsfluss (TF) zu teilen und auf die besagten n logischen Schnittstellen (IF1, ... IFn) zu verteilen, unter der Voraussetzung, dass die besagten n jeweiligen Bandbreiten (BW1, ... BWn) gleich der oder größer als die besagte Mindestbandbreite (BWmin) sind.

3. Knoten (N) nach Anspruch 2, wobei die besagte Steuerlogik (CL) für das Ändern einer jeden der besagten n jeweiligen Bandbreiten (BW1, ... BWn) um die besagte Menge (ΔB) nacheinander konfiguriert ist.

4. Knoten (N) nach Anspruch 2 oder 3, wobei die besagten n logischen Schnittstellen (IF1, ... IFn) n virtuellen Verkettungsgruppen (G1, ... Gn) entsprechen, und die besagte Steuerlogik (CL) für das Ändern einer jeden der besagten n jeweiligen Bandbreiten (BW1, ... BWn) um die besagte Menge (ΔB) durch Hinzufügen oder Entfernen einer Anzahl (k, k') von virtuellen Containern zu oder aus einer jeden der besagten n virtuellen Verkettungsgruppen (G1, ... Gn) konfiguriert ist.

5. Knoten (N) nach einem beliebigen der vorstehenden Ansprüche, wobei, wenn die besagten n jeweiligen Bandbreiten (BW1, ... BWn) den besagten ersten Wert (B) aufweisen, die besagte Steuerlogik (CL) weiterhin ausgelegt ist für:

- das Erkennen, dass mindestens eine logische Schnittstelle (IFk) der besagten n logischen Schnittstellen (IF1, ... IFn) aufgrund eines Fehlers eine reduzierte Bandbreite (BWk) aufweist, welche dem besagten zweiten Wert (Bf) entspricht, der kleiner ist als der besagte erste Wert (B);
- das Bestimmen der besagten Mindestbandbreite (BWmin) als das besagte Minimum unter den besagten n jeweiligen Bandbreiten (BW1, BWn); und
- das Anweisen des besagten Teilers (D), vor Beheben des besagten Fehlers den besagten Verkehrsfluss (TF) zu teilen und an die besagten n logischen Schnittstellen (IF1, ... IFn) zu verteilen, unter der Voraussetzung, dass die besagten n jeweiligen Bandbreiten (BW1, ... BWn) der besagten Mindestbandbreite (BWmin) entsprechen.

6. Knoten (N) nach Anspruch 5, wobei die besagte Steuerlogik (CL) konfiguriert ist für:

- das Vergleichen der besagten reduzierten Bandbreite (BWk) mit einem Grenzwert (TH);
- wenn die besagte reduzierte Bandbreite (BWk) größer als der besagte Grenzwert (TH) ist, das Bestimmen der besagten Mindestbandbreite (BWmin) als das besagte Minimum unter den besagten n jeweiligen Bandbreiten (BW1, ... BWn), und das Anweisen des besagten Teilers (D), vor Beheben des besagten Fehlers den besagten Verkehrsfluss (TF) zu teilen und an die besagten n logischen Schnittstellen (IF1, ... IFn) zu verteilen, unter der Voraussetzung, dass die besagten n jeweiligen Bandbreiten (BW1, ... BWn) der besagten Mindestbandbreite (BWmin) entsprechen; und
- wenn die besagte reduzierte Bandbreite (BWk) kleiner als der besagte Grenzwert (TH) ist, das Entfernen der besagten mindestens einen logischen Schnittstelle (IFk) aus der besagten Link-Aggregation-Gruppe (100) und das Anweisen des besagten Teilers (D), vor Beheben des besagten Fehlers den besagten Verkehrsfluss (TF) zu teilen und an die restlichen logischen Schnittstellen der besagten n logischen Schnittstellen (IF1, ... IFn) zu verteilen.

7. Knoten (N) nach Anspruch 6, wobei die besagte Steuerlogik (CL) für das Bereitstellen des besagten Grenzwerts (TH) gemäß der folgenden Gleichung konfiguriert ist:

$$TH = \frac{n-1}{n} \times B,$$

wobei TH für den besagten Grenzwert steht, und B für den besagten ersten Wert der besagten n jeweiligen Bandbreiten (BW1, ... BWn) vor Auftreten des besagten Fehlers steht.

8. Kommunikationsnetzwerk mit einem Knoten (N) gemäß einem beliebigen der vorstehenden Ansprüche.

9. Verfahren zum Übertragen eines Verkehrsflusses (TF) über eine Link-Aggregation-Gruppe (100) eines Knotens (N) eines Kommunikationsnetzwerks, wobei der besagte Knoten (N) n logische Schnittstellen (IF1, ... IFn) umfasst, welche derart aggregiert sind, dass sie die besagte Link-Aggregation-Gruppe (100) bilden, wobei n eine ganze Zeil gleich oder größer als 2 ist, wobei die besagten n logischen Schnittstellen (IF1, ... IFn) n jeweiligen Bandbreiten (BW1, ... BWn) aufweisen, wobei das besagte Verfahren **dadurch gekennzeichnet ist, dass** es, wenn mindestens eine erste Bandbreite der besagten n jeweiligen Bandbreiten (BW1, ... BWn) einen ersten Wert (B) aufweist und mindestens eine zweite Bandbreite der besagten n jeweiligen Bandbreiten (BW1, ... BWn) einen zweiten Wert (B+ ΔB; Bf) aufweist, welcher sich von dem besagten ersten Wert (B) unterscheidet, die folgenden Schritte umfasst:

a) Bestimmen einer Mindestbandbreite (BWmin) als ein Minimum unter den besagten n jeweiligen Bandbreiten (BW1, BWn); und
b) Teilen und Verteilen des besagten Verkehrsflusses (TF) an die besagten n logischen Schnittstellen (IF1, ... IFn), unter der Voraussetzung, dass die besagten n jeweiligen Bandbreiten (BW1, ... BWn) der besagten Mindestbandbreite (BWmin) entsprechen.

10. Verfahren nach Anspruch 9, wobei das besagte Verfahren weiterhin das Ändern einer Gesamtbandbreite (OBW) der besagten Link-Aggregation-Gruppe (100) umfasst, wobei die besagten n jeweiligen Bandbreiten (BW1, ... BWn) vor der besagten Änderung den besagten ersten Wert (B) aufweisen, wobei das besagte Ändern umfasst:

c) Ändern einer jeden der besagten n jeweiligen Bandbreiten (BW1, ... BWn) um eine Menge (ΔB) so dass mindestens eine der besagten n jeweiligen Bandbreiten (BW1, ... BWn) während der besagten Änderung den besagten zweiten Wert (B+ ΔB), welcher sich von dem besagten zweiten Wert (B) unterscheidet, aufweist,

wobei die besagten Schritte a) und b) während der Durchführung des besagten Schritts c) durchgeführt werden.

11. Verfahren nach Anspruch 10, wobei der besagte Schritt c) das Ändern einer besagten jeden der besagten n jeweiligen Bandbreiten (BW1, ... BWn) nacheinander um die besagte Menge (ΔB) umfasst.

12. Verfahren nach Anspruch 10 oder 11, wobei die besagten n logischen Schnittstellen (IF1, ... IFn) n virtuellen Verkettungsgruppen (G1, ... Gn) entsprechen, und wobei der besagte Schritt c) das Hinzufügen oder Entfernen einer Anzahl (k, k') von virtuellen Containern zu oder aus einer jeden der besagten n virtuellen Verkettungsgruppen (G1, ... Gn) umfasst.

13. Verfahren nach Anspruch 9, wobei das besagte Verfahren weiterhin das Verwalten eines Fehlers, welcher mindestens eine logische Schnittstelle (IFk) der besagten n logischen Schnittstellen (IF1, ... IFn) beeinträchtigt, umfasst, wobei die besagten n jeweiligen Bandbreiten (BW1, ... BWn) vor Auftreten des besagten Fehlers den besagten ersten Wert (B) aufweist, wobei das besagte Verwalten umfasst:

c') Erkennen, dass die besagte mindestens eine logische Schnittstelle (IFk) aufgrund des besagten Fehlers eine Bandbreite (BWk) mit dem besagten zweiten Wert (Bf), welcher kleiner ist als der besagte erste Wert (B), aufweist,

wobei die besagten Schritte a) und b) vor Beheben des besagten Fehlers durchgeführt werden.

14. Verfahren nach Anspruch 13, weiterhin umfassend:

- Nach Durchführen des besagten Schritts c'), Vergleichen der besagten reduzierten Bandbreite (BWk) mit einem Grenzwert (TH);
- wenn die besagte reduzierte Bandbreite (BWk) größer ist als der besagte Grenzwert (TH), Durchführen der besagten Schritte a) und b); und
- wenn die besagte reduzierte Bandbreite (BWk) kleiner ist als der besagte Grenzwert (TH), Entfernen der besagten mindestens einen logischen Schnittstelle (IFk) aus der besagten Link-Aggregation-Gruppe (100), und Teilen und Verteilen des besagten Verkehrsflusses (TF) an die restlichen logischen Schnittstellen der besagten n logischen Schnittstellen (IF1, ... IFn).

15. Verfahren nach Anspruch 14, wobei das besagte Vergleichen das Bereitstellen des besagten Grenzwerts (TH) gemäß der folgenden Gleichung umfasst:

$$TH = \frac{n-1}{n} \times B,$$

wobei TH für den besagten Grenzwert steht, und B für den besagten ersten Wert der besagten n jeweiligen Bandbreiten (BW1, ... BWn) vor Auftreten des besagten Fehlers steht.

**Revendications**

1. Noeud (N) pour un réseau de communication, ledit noeud (N) comprenant :

- des interfaces logiques (IF1, ...IFn) agrégées de sorte à former un groupe d'agrégation de liens (100) configuré pour transmettre un flux de trafic (TF), n étant un nombre entier supérieur ou égal à 2, lesdites n interfaces logiques (IF1, ... IFn) présentant n largeurs de bande respectives (BW1, ...BWn) ; et
- un diviseur (D) configuré pour diviser ledit flux de trafic (TF) et pour le répartir parmi lesdites n interfaces logiques (IF1, ... IFn),

ledit noeud (N) étant **caractérisé en ce qu'**il comprend en outre :

- une logique de commande (CL) configurée pour, lorsqu'au moins une première largeur de bande desdites n largeurs de bande respectives (BW1, ... BWn) présente une première valeur (B) et au moins une deuxième largeur de bande desdites n largeurs de bande respectives (BW1, BWn) présente une deuxième valeur (B+ΔB ; Bf) différente de ladite première valeur (B) :

- déterminer une largeur de bande minimum (BWmin) comme étant une largeur de bande minimum parmi lesdites n largeurs de bande respectives (BW1, ... BWn) ; et
- donner l'ordre audit diviseur (D) de diviser ledit flux de trafic (TF) et de le répartir parmi lesdites n interfaces logiques (IF1, ... IFn) en supposant que lesdites n largeurs de bande respectives (BW1, ... BWn) soient égales à ladite largeur de bande minimum (BWmin).

2. Noeud (N) selon la revendication 1 dans lequel, lorsque lesdites n largeurs de bande respectives (BW1, ... BWn) présentent ladite première valeur (B), ladite logique de commande (CL) est en outre configurée pour :

- recevoir une demande pour modifier une largeur de bande globale (OBW) dudit groupe d'agrégation de liens (100) ;
- modifier chacune desdites n largeurs de bande respectives (BW1, ... BWn) en fonction d'une valeur (ΔB) de sorte que, durant ladite modification, au moins une desdites n largeurs de bande respectives (BW1, ... BWn) présente ladite deuxième valeur (B+ΔB) différente de ladite première valeur (B),
- durant ladite modification, déterminer ladite largeur de bande minimum (BWmin) comme étant ladite largeur de bande minimum parmi lesdites n largeurs de bande respectives (BW1, ... BWn), et donner l'ordre audit diviseur (D) de diviser ledit flux de trafic (TF) et de le répartir parmi lesdites n interfaces logiques (IF1, ... IFn), en supposant que lesdites n largeurs de bande respectives (BW1, ... BWn) soient égales à ladite largeur de bande minimum (BWmin).

3. Noeud (N) selon la revendication 2, dans lequel ladite logique de commande (CL) est configurée pour modifier chacune desdites n largeurs de bande respectives (BW1, ... BWn) en fonction de ladite valeur (ΔB) une par une.

4. Noeud (N) selon la revendication 2 ou 3, dans lequel lesdites n interfaces logiques (IF1, ... IFn) correspondent aux n groupes de concaténation virtuelle (G1, ... Gn), et dans lequel ladite logique de commande (CL) est configurée pour modifier chacune desdites n largeurs de bande respectives (BW1, ... BWn) en fonction de ladite valeur (ΔB) en ajoutant un nombre (k, k') de conteneurs virtuels à, ou en retirant ledit nombre de, chacun desdits n groupes de concaténation virtuelle (G1, ... Gn).

5. Noeud (N) selon l'une quelconque des revendications précédentes dans lequel, lorsque lesdites n largeurs de bande respectives (BW1, ... BWn) présentent ladite première valeur (B), ladite logique de commande (CL) est en outre configurée pour :

- détecter qu'au moins une interface logique (IFk) desdites n interfaces logiques (IF1, ... IFn), en raison d'une défaillance, présente une largeur de bande réduite (BWk) égale à ladite deuxième valeur (Bf) qui est inférieure à ladite première valeur (B) ;
- déterminer ladite largeur de bande minimum (BWmin) comme étant ladite largeur de bande minimum parmi lesdites n largeurs de bande respectives (BW1, ... BWn) ; et
- donner l'ordre audit diviseur (D), avant la correction de ladite défaillance, de diviser ledit flux de trafic (TF) et de le répartir parmi lesdites n interfaces logiques (IF1, ... IFn) en supposant que lesdites n largeurs de bande respectives (BW1, ... BWn) soient égales à ladite largeur de bande minimum (BWmin).

6. Noeud (N) selon la revendication 5, dans lequel ladite logique de commande (CL) est configurée pour :

- comparer ladite largeur de bande réduite (BWk) à un seuil (TH) ;
- si ladite largeur de bande réduite (BWk) est supérieure audit seuil (TH), déterminer ladite largeur de bande minimum (BWmin) comme étant ladite largeur de bande minimum parmi lesdites n largeurs de bande respectives (BW1, ... BWn), et donner l'ordre audit diviseur (D), avant la correction de ladite défaillance, de diviser ledit flux de trafic (TF) et de le répartir parmi lesdites n interfaces logiques (IF1, ... IFn), en supposant que lesdites n largeurs de bande respectives (BW1, ... BWn) soient égales à ladite largeur de bande minimum (BWmin) ; et
- si ladite largeur de bande réduite (BWk) est inférieure audit seuil (TH), retirer ladite au moins une interface logique (IFk) dudit groupe d'agrégation de liens (100), et donner l'ordre audit diviseur (D), avant la correction de ladite défaillance, de diviser ledit flux de trafic (TF) et de le répartir parmi les interfaces logiques restantes desdites n interfaces logiques (IF1, ... IFn).

**7.** Noeud (N) selon la revendication 6, dans lequel ladite logique de commande (CL) est configurée pour fournir ledit seuil (TH) selon l'équation suivante :

$$TH = \frac{n-1}{n} \times B,$$

TH étant ledit seuil et B étant ladite première valeur desdites n largeurs de bande respectives (BW1, ... BWn) avant l'apparition de ladite défaillance.

**8.** Réseau de communication comprenant un noeud (N) selon l'une quelconque des revendications précédentes.

**9.** Procédé de transmission d'un flux de trafic (TF) par l'intermédiaire d'un groupe d'agrégation de liens (100) d'un noeud (N) d'un réseau de communication, ledit noeud (N) comprenant n interfaces logiques (IF1, ... IFn) agrégées de sorte à former ledit groupe d'agrégation de liens (100), n étant un nombre entier supérieur ou égal à 2, lesdites n interfaces logiques (IF1, ... IFn) présentant n largeurs de bande respectives (BW1, ... BWn), ledit procédé étant **caractérisé en ce qu'**il comprend, lorsqu'au moins une première largeur de bande desdites n largeurs de bande respectives (BW1, ... BWn) présente une première valeur (B), et lorsqu'au moins une deuxième largeur de bande desdites n largeurs de bande respectives (BW1, ... BWn) présente une deuxième valeur (B+ ∆B ; Bf) différente de ladite première valeur (B), les étapes suivantes :

a) déterminer une largeur de bande minimum (BWmin) comme étant une largeur de bande minimum parmi lesdites n largeurs de bande respectives (BW1, BWn) ; et
b) diviser ledit flux de trafic (TF) et le répartir parmi lesdites n interfaces logiques (IF1, ... IFn) en supposant que lesdites n largeurs de bande respectives (BW1, ... BWn) soient égales à ladite largeur de bande minimum (BWmin).

**10.** Procédé selon la revendication 9, ledit procédé comprenant en outre la modification d'une largeur de bande globale (OBW) dudit groupe d'agrégation de liens (100), dans lequel lesdites n largeurs de bande respectives (BW1, ... BWn) présentent ladite première valeur (B) avant que ladite modification soit appliquée, ladite modification comprenant :

c) la modification de chacune desdites n largeurs de bande respectives (BW1, ... BWn) en fonction d'une valeur (∆B) de sorte que, durant ladite modification, au moins une desdites n largeurs de bande respectives (BW1, ... BWn) présente ladite deuxième valeur (B+∆B) différente de ladite première valeur (B),

dans lequel lesdites étapes a) et b) sont exécutées lorsque ladite étape c) est exécutée.

**11.** Procédé selon la revendication 10, dans lequel ladite étape c) comprend la modification de chacune desdites n largeurs de bande respectives (BW1, ... BWn) en fonction de ladite valeur (∆B) une par une.

**12.** Procédé selon la revendication 10 ou 11, dans lequel lesdites n interfaces logiques (IF1, ... IFn) correspondent à n groupes de concaténation virtuelle (G1, ... Gn), et dans lequel chaque étape c) comprend l'ajout d'un nombre (k, k') de conteneurs virtuels à, ou le retrait dudit nombre de, chacun desdits n groupes de concaténation virtuelle (G1, ... Gn).

**13.** Procédé selon la revendication 9, ledit procédé comprenant en outre la gestion d'une défaillance affectant au moins une interface logique (IFk) desdites n interfaces logiques (IF1, ... IFn), dans lequel lesdites n largeurs de bande respectives (BW1, ... BWn) présentent ladite première valeur (B) avant l'apparition de ladite défaillance, ladite gestion comprenant l'étape suivante :

c') détecter que ladite au moins une interface logique (IFk), en raison de ladite défaillance, présente une largeur de bande (BWk) avec ladite deuxième valeur (Bf) inférieure à ladite première valeur (B),

dans lequel lesdites étapes a) et b) sont exécutées avant la correction de ladite défaillance.

**14.** Procédé selon la revendication 13, comprenant en outre les étapes suivantes :

- après ladite étape c'), comparer ladite largeur de bande réduite (BWk) à un seuil (TH) ;
- si ladite largeur de bande réduite (BWk) est supérieure audit seuil (TH), exécuter lesdites étapes a) et b) ; et
- si ladite largeur de bande réduite (BWk) est inférieure audit seuil (TH), retirer ladite au moins une interface logique (IFk) dudit groupe d'agrégation de liens (100), et diviser ledit flux de trafic (TF) et le répartir parmi les interfaces logiques restantes desdites n interfaces logiques (IF1, ... IFn).

**15.** Procédé selon la revendication 14, dans lequel ladite comparaison comprend la fourniture dudit seuil (TH) conformément à l'équation suivante :

$$TH = \frac{n-1}{n} \times B,$$

TH étant ledit seuil et B étant ladite première valeur desdites n largeurs de bande respectives (BW1, ... BWn) avant l'apparition de ladite défaillance.

<u>Figure 1a</u>

Figure 1b

start → OBW = n x B → **201** increase OBW?

no (loops back to OBW = n x B)

yes → **202** i=1 → **203** increase BWi by ΔB → **204** BWmin=min{BWj} where j=1, ... n → **205** share traffic among IF1, ... IFn assuming that BWj=BWmin for j=1,... n → **206** i=n?

no → **207** i=i+1 (loops back to increase BWi by ΔB)

yes → OBW = n x (B+ΔB) → end

**Figure 2**

```
                        ┌─────────────┐
                        │    start    │
                        └─────────────┘
                               │
                               ▼
            ┌──────────────────────────┐
    ┌──────▶│      OBW = n x B         │
    │       └──────────────────────────┘
    │                      │
    │                      ▼          301
    │              ╱────────────────╲
  no│             ╱  any failure     ╲      yes    ┌──────────────────┐
    │◀───────────◀   detected?        ◀──────────▶│    IFk failed    │
    │             ╲                  ╱             └──────────────────┘
    │              ╲────────────────╱                        │
    │                                                        ▼
    │                           302                  ╱────────────────╲
    │                          ╲──────────╲         ╱                  ╲   yes
    │                           ╱  BWk≥TH?  ╲──────▶◀    BWk≥TH?        ◀───────▶
    │                           ╲          ╱        ╲                  ╱
    │                            ╲────────╱          ╲────────────────╱
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102005037580 B3